Europäisches Patentamt

European Patent Office

Office européen des brevets

(19)

(11) Publication number: **0 122 891**
**B1**

(12) **EUROPEAN PATENT SPECIFICATION**

(45) Date of publication of patent specification: **09.09.87**

(51) Int. Cl.⁴: **B 60 G 21/04**

(21) Application number: **84830106.5**

(22) Date of filing: **09.04.84**

(54) **Improvements in motor vehicle suspensions.**

(30) Priority: **18.04.83 IT 6742183**

(43) Date of publication of application:
**24.10.84 Bulletin 84/43**

(45) Publication of the grant of the patent:
**09.09.87 Bulletin 87/37**

(84) Designated Contracting States:
**DE FR GB SE**

(56) References cited:
**DE-A-2 361 009**
**DE-C- 928 449**
**FR-A- 853 743**
**FR-A-1 539 129**
**FR-A-2 016 544**
**FR-A-2 481 198**
**GB-A-1 136 576**
**GB-A-2 021 053**
**US-A-2 049 474**
**US-A-2 231 285**
**US-A-2 270 572**
**US-A-3 767 224**

(73) Proprietor: **FIAT AUTO S.p.A.**
**Corso Giovanni Agnelli 200**
**I-10135 Torino (IT)**

(73) Proprietor: **Teksid S.p.A.**
**Via Pianezza 123**
**I-10151 Torino (IT)**

(72) Inventor: **May, Pierluigi**
**Via Ruggero di Lauria 3**
**I-20149 Milano (IT)**
Inventor: **Egidi, Corrado**
**Corso Montecucco 84/D**
**I-10141 Torino (IT)**

(74) Representative: **Notaro, Giancarlo et al**
**c/o Jacobacci-Casetta & Perani S.p.A. Via Alfieri,**
**17**
**I-10121 Torino (IT)**

Courier Press, Leamington Spa, England.

## Description

The present invention relates to a suspension system for motor vehicles, of the type specified in the preamble of claim 1.

A suspension system of this type is known from FR—A—2 481 198. With such known system, when the two longitudinal arms have different oscillations relative to the motor vehicle body, which happens for example when the vehicle moves along a curve, the twisting movement about the axis of the transverse bar caused by such different oscillations are discharged entirely, or at least substantially, by the sleeves of elastomeric material. This is advantageous with respect to the conventional solution in which the transverse bar is rigidly fixed to the two longitudinal arms, since in this latter case the transverse bar must be constituted by an element with an open cross-section in order to provide the requested deformability in torsion. Thus, in the conventional solution, the manufacture of the transverse bar as well as the fixing of the ends of the transverse bar (usually by welding) to the longitudinal arms are relatively complicated and expensive. In spite of the above-mentioned advantage over the conventional art, the known system illustrated in FR—A—2 481 198 has the drawback that the transverse bar may tilt relative to each longitudinal arm about an axis perpendicular to the axis of the transverse bar, due to the deformability of the sleeve of elastomeric material.

It is also known from FR—A—2 016 544 a suspension having two longitudinal arms connected by a transverse bar which is rigidly fixed to the longitudinal arms and is torsionally deformable, the transverse bar being located within a tubular casing having each of its ends rotatably supported by the respective longitudinal arm by means of two spaced apart rolling bearings. There is no teaching nor suggestion in this document of providing at least one sleeve of elastomeric material interposed between one end of the transverse bar and the respective longitudinal arm in order to avoid torsional deformation of the transverse bar.

The object of the present invention is to provide a suspension system of the type specified at the beginning of this description, which is simple and cheap to construct and assemble, and is highly reliable.

In order to achieve this object, the invention provides a suspension system having the features indicated in the characterizing portion of the appended claim 1.

Further characteristics and advantages of the present invention will emerge from the description which follows with reference to the appended drawings, provided purely by way of non-limiting example, in which:

Figure 1 is a schematic plan view of a suspension system according to the invention,

Figure 2 illustrates a detail of the suspension system of Figure 1 in section and on an enlarged scale, and

Figure 3 illustrates a variant of Figure 2.

The drawings illustrate, by way of example, a rear suspension 1 for a front-wheel drive motor vehicle.

The suspension 1 includes a transverse bar 2 constituted by a circular-section tube 2 of steel or light alloy (preferably made by extrusion), the ends 3 of which are connected (in a manner which will be described in detail below) to the central parts of two longitudinal arms 4 each of which has one end 5 articulated about an axis 6 to the body of the motor vehicle (not illustrated) and its opposite end 7 carrying the mounting for a respective rear wheel 8 of the motor vehicle.

Each longitudinal arm 4 has means for the attachment of a suspension spring 9 and the respective shock-absorber.

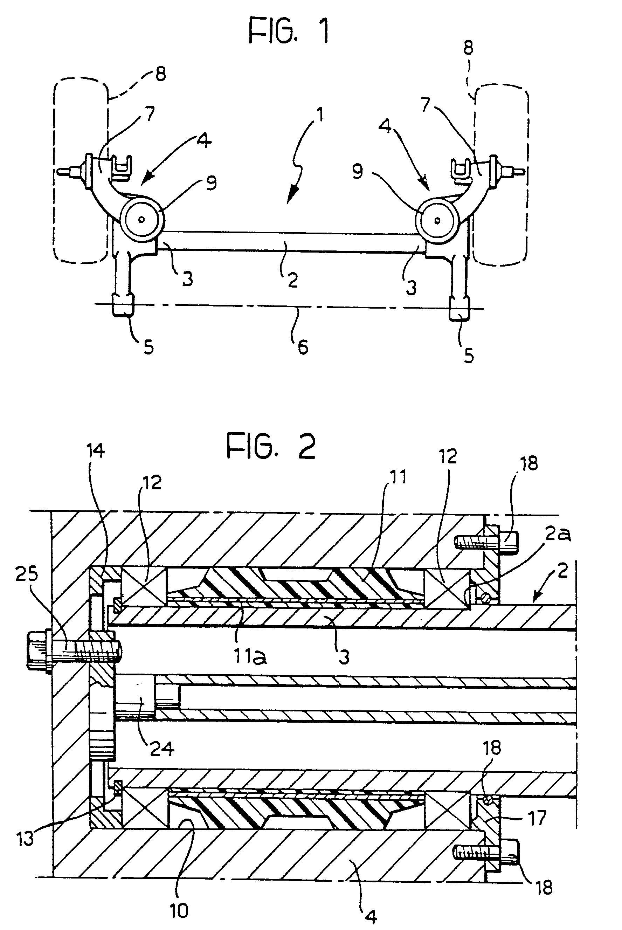

Figure 2 illustrates, in section, one end 3 of the tube constituting the transverse bar 2 mounted within a seat 10 in the corresponding longitudinal arm 4 with the interposition of a rubber sleeve 11, of known type, having a tubular metal insert 11a (the metal insert 11a is necessary in case the twisting moments which the sleeve 11 must transmit are high). The inner surface of the sleeve 11 adheres to the transverse bar 2 and its outer surface adheres to the surface of the seat 10. In the example illustrated, this is achieved simply by force-fitting the sleeve 11. The sleeve is interposed axially between two annular supports 12 which, in use, prevent oscillations of the longitudinal arm 4 relative to the transverse bar 2 about an axis perpendicular to the axis of the bar, and which are constituted by two rolling bearings of sealed type (to prevent grease from the bearings damaging the rubber of the sleeve 11). Instead of the rolling bearings 12, it is also possible to use plain bearings constituted by a material with a low coefficient of friction, for example, a plastics material, or metal rings provided internally with a wear-resistant material.

In the example illustrated the seat 10 in the longitudinal arm 4 housing the transverse bar 2 is constituted by a blind hole formed in this arm. However, it could also be constituted by a through hole closed at one end by a cover fixed to the longitudinal arm 4 by screws.

The sleeve 11 of elastomeric material and the two annular supports 12 adjacent the ends thereof are locked between a shoulder 2a of the bar (which may also be constituted by ring welded to the bar) and a resilient ring 13 mounted on the end of the bar. The outer rings of the rolling bearings 12 bear respectively against an annular cover 17 fixed by screws 18 to the longitudinal arm 4 and a spacing ring 14 fitted fully into the seat 10. The cover 17 has an annular sealing washer 19 surrounding the bar 2.

The two longitudinal arms 4 may be connected together by means of a tie rod 20. Each end of the tie rod 20 has a flanged element 24 fixed by screws 25 (for example, three screws at 120°) to the end wall of the seat 10 in the arm 4. Thus, the twisting moments induced by oscillations of the longitudinal arms are also discharged by the tie rod 20.

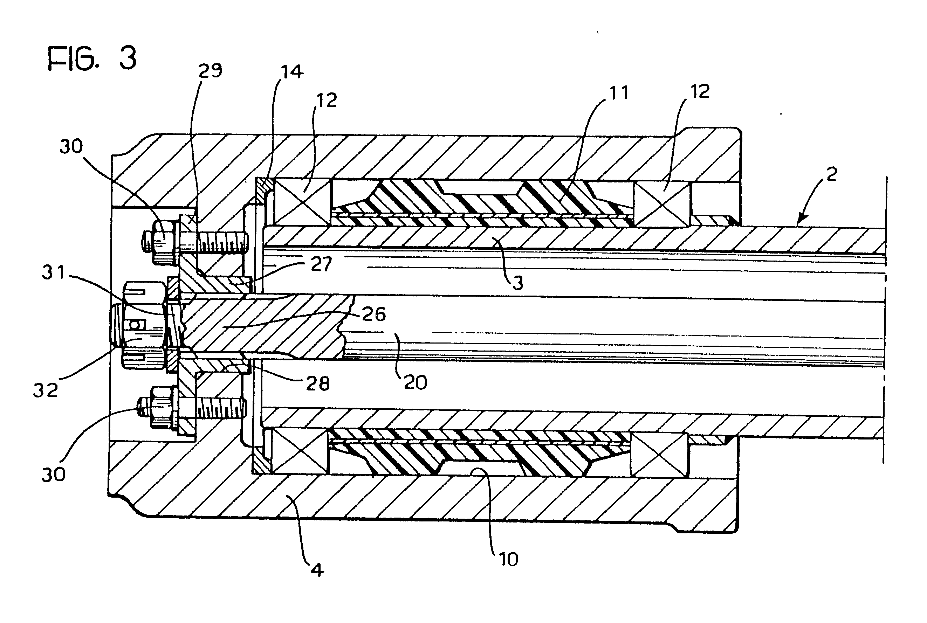

In the variant of Figure 3, the tie rod 20 has a grooved end portion 26 fitted for axial sliding movement in an internally-grooved ring 27 which is inserted in a hole 28 in the arm 4 and is provided with a flange 29 secured by bolts 30 to the arm 4. The tie rod 20 has a screw-threaded tang 31 on which an adjustment nut 32 is engaged.

The sleeve 11 of elastomeric material may be provided at only one end of the transverse bar 2 or at both ends.

In the first case, the twisting moments about the axis of the transverse bar 2 caused by oscillations of the longitudinal arms 4 about their axes of articulation 6 are discharged entirely, or at least substantially, by the single sleeve of elastomeric material. In the second case, these twisting moments are discharged by both the sleeves, being divided between them.

The transverse bar may be formed of steel or light alloy. In the latter case, it is preferably made by extrusion.

The structure described above has particular advantages of simplicity and economy of manufacture and facility and quickness of assembly.

Since the twisting moments exerted on the suspension are discharged by each sleeve of elastomeric material, the transverse bar has only to resist the bending forces and may thus be formed from a tubular element, to the advantage of simplicity and economy.

## Claims

1. Motor vehicle suspension system comprising a transverse bar (2) connected at its ends to the central parts of two longitudinal arms (4) each of which is connected at one end to the motor vehicle body and at its opposite end (7) carries a mounting for a respective wheel (8), at least one end (3) of the transverse bar (2) being located within a respective seat (10) in the corresponding longitudinal arm (4) with the interposition of a sleeve (11) of elastomeric material, the internal surface of the sleeve adhering to the transverse bar (2) and the external surface adhering to the surface of the seat (10) in the longitudinal arm, whereby, in use, the transverse bar (2) is subject substantially solely to bending, characterized in that adjacent the ends of the or each sleeve (11) of elastomeric material two rolling bearings (12) are provided, which are interposed between the transverse bar (2) and the respective seat (10) in the longitudinal arm (4) and prevent oscillations of the transverse bar (2) about an axis perpendicular to the axis of the bar, and in that each sleeve (11) of elastomeric material includes a tubular metal insert extending axially throughout the whole length of the sleeve, the ends of the sleeve being in direct contact with said bearings (12).

2. Suspension system according to Claim 1, characterised in that the two longitudinal arms (4) are connected together by means of a tie rod (20) located coaxially within the transverse bar (2), said tie rod (20) having at least one grooved end portion (26) fitted within an internally-grooved ring (27) which is fixed to the respective longitudinal arm, said end portion (26) having a screw-threaded tang (31) on which an adjustment nut (32) is engaged.

## Patentansprüche

1. Kraftfahrzeug-Aufhängungssystem mit einem Querstab (2), der an seinen Enden mit den zentralen Teilen zweier Längslenker (4) verbunden ist, von denen jeder mit einem Ende mit der Kraftfahrzeugkarosserie verbunden ist und an seinem anderen Ende (7) Befestigungsmittel für ein zugeordnetes Rad (8) trägt, wobei wenigstens ein Ende (3) des Querstabs (2) unter Zwischenfügung einer Hülse (11) aus elastomerem Material in einen zugeordneten Sitz (10) in dem betreffenden Längslenker (4) aufgenommen ist und wobei die Innenfläche dieser Hülse an dem Querstab (2) und die Außenfläche an der Fläche des Sitzes (10) in dem Längslenker haftet, so daß der Querstab (2) im Betrieb im wesentlichen nur auf Biegung beansprucht ist, dadurch gekennzeichnet, daß in der Nähe der Enden der oder jeder Hülse (11) zwei Wälzlager (12) vorgesehen sind, die zwischen dem Querstab (2) und dem zugeordneten Sitz (10) in dem Längslenker (4) eingesetzt sind und Schwingungen des Querstabs (2) um eine senkrecht zur Achse des Stabs verlaufende Achse verhindern, und daß jede Hülse (11) aus elastomerem Material einen rohrförmigen Metalleinsatz enthält, der sich axial über die gesamte Länge der Hülse erstreckt, wobei die Enden der Hülse in direktem Kontakt mit den genannten Wälzlagern (12) stehen.

2. Aufhängungssystem nach Anspruch 1, dadurch gekennzeichnet, daß die beiden Längslenker (4) mittels einer koaxial in dem Querstab (2) angeordneten Spurstange (20) verbunden sind, die wenigstens einen mit Nuten versehenen Endbereich (26) besitzt, der in einen an dem betreffenden Längslenker fixierten, mit Innennuten versehenen Ring (27) eingepaßt ist, und daß dieser Endbereich (26) einen Gewindezapfen (31) aufweist, auf den eine Einstellmutter (32) aufgebracht ist.

## Revendications

1. Dispositif de suspension pour véhicule automobile comprenant une barre transversale (2) qui est reliée à ses extrémités aux parties centrales de deux bras longitudinaux (4) dont chacun est relié, à une extrémité, à la caisse du véhicule automobile tandis que, à son extrémité opposée (7) il porte un support pour une roue (8) correspondante; au moins une extrémité (3) de la barre transversale (2) étant logée dans un logement correspondant (10) ménagé dans le bras longitudinal (4) correspondant, avec interposition d'un manchon (11) en matière élastomère, la surface interne du manchon adhérant à la barre transversale (2) et la surface externe adhérant à la surface du logement (10) ménagé dans le bras longitudinal, de sorte que, en utilisation, la barre transversale (2) est uniquement sollicitée à la flexion, caractérisé en ce qu'à proximité des extrémités du manchon ou de chaque manchon (11) en matière élastomère, sont prévus deux roulements (12) qui sont interposés entre la barre transversale (2) et les logements correspondants (10) des bras longitudinaux (4) et qui interdisent les oscillations de la barre transversale (2) autour d'un axe perpendiculaire à l'axe de la barre, et en ce que ce manchon (11) en matière élastomère comprend une insertion métallique tubulaire qui s'étend axialement sur toute la longueur du manchon, les extrémités du manchon étant en contact direct avec lesdits roulements (12).

2. Dispositif de suspension selon la revendication 1, caractérisé en ce que les deux bras longitudinaux (4) sont assemblés l'un à l'autre au moyen d'un tirant (20) placé coaxialement à l'intérieur de la barre transversale (2), ledit tirant (20) possédant au moins une partie d'extrémité cannelée (26) qui est montée dans une bague (27) cannelée intérieurement qui est fixée au bras longitudinal correspondant, ladite partie d'extrémité (26) possédant une queue filetée (31) sur laquelle un écrou de réglage (32) est vissé.

# FIG. 1

# FIG. 2

FIG. 3